# EUROPEAN PATENT APPLICATION

(11) **EP 3 689 710 A1**
(43) Date of publication of application: **05.08.2020**
(21) Application number: 18861500.9
(22) Date of filing: 24.01.2018
(51) Int. Cl.: B62D 7/18, B62D 7/20, B21K 7/12

(54) **VEHICLE STEERING KNUCKLE INTEGRALLY FORMED WITH STEERING ARM AND MACHINING PROCESS THEREOF**

(30) Priority: 27.09.2017 CN 201710885583
(71) Applicant: Hubei Tri-Ring Forging Co., Ltd., Xiangyang, Hubei 441700 (CN)
(72) Inventor: ZHANG, Yunjun, Xiangyang Hubei 441700 (CN); YANG, Jie, Xiangyang Hubei 441700 (CN); CHEN, Tianfu, Xiangyang Hubei 441700 (CN); GAN, Wanbing, Xiangyang Hubei 441700 (CN); HUANG, Mingwei, Xiangyang Hubei 441700 (CN); YAN, Yang, Xiangyang Hubei 441700 (CN); WANG, Guowen, Xiangyang Hubei 441700 (CN); YU, Guolin, Xiangyang Hubei 441700 (CN); ZUO, Changbing, Xiangyang Hubei 441700 (CN); WANG, Zhanbing, Xiangyang Hubei 441700 (CN)
(74) Representative: Zeuner Summerer Stütz
(86) International application number: PCT/CN2018/073944
(87) International publication number: WO 2019/061966

(57) **Abstract**

A vehicle steering knuckle integrally formed with a steering arm and a machining process thereof. The steering knuckle comprises a rod portion (1), a plate portion (2), and a lug portion (3). The lug portion (3) comprises a long lug (31) and a short lug (32). The long lug (31) and the short lug (32) are each provided with a main pin hole (4). A steering arm (6) connected to a steering tie rod extends laterally from a front end of the short lug (32) on a plane perpendicular to the main pin hole (4). The steering knuckle is integrally forged. During machining, the lug portion is first machined to form two long straight arms. Since the lug portion does not have any other connecting arm, the structure is simple and easily forged. Afterwards, one of the long straight arms is bent into the steering arm to reduce forging difficulty. The invention is structurally sound. The steering arm is extended in order to connect to other components, thereby simplifying the structure of a vehicle steering system, and resulting in a novel, lightweight steering knuckle.

## Description

### TECHNICAL FIELD

This invention relates to atechnical field of vehiclesteering knuckles, in particular to a vehicle steering knuckle integrally formed with steering arm and machining process thereof.

### BACKGROUND

A steering knuckle is one of main portions of a vehicle, which can effectively connects abraking system, a steering system, and a suspension system via multiple portions. It plays adual task of steering and bulging, and it is an important safety portion of the vehicle chassis. The steering knuckle enables the vehicle to run stably and to transmit the driving direction sensitively. At the same time, it needs to blugafront load of the vehicle, support and drive a front wheel to rotate around a main pin, and then steerthe vehicle. The steering knuckle is generally fork-shaped, and comprisesa rod portion, a lugportion, and a plateportion. The lugportion includes long lugs and short lugs. The long lugs and short lugs have a main pin hole for installing the main pin.

When the vehiclesteers, the force of asteering rocker arm is transmitted to a pulling arm fixed to the steering knuckle through astraight pullingrod, so that the steering knuckle drives the wheel to deflect. At the same time, the steering knuckle then drives the steering arm (also known as trapezoidal arm), and the wheels on the other side is deflected by the movement of a steering cross rod. In the prior art, the knuckle is connected with the pullingarm and the steering arm by bolts. The hole for connecting the knuckle with the pulling arm and the steering arm is provided in the long lug, the short lug or the plateportion. Some of the steering knuckle protrudes from a connection arm so as to respectively be used to connect the pullingarm and the steering arm. This structure results in a complicated structure of the steering system of the vehicle and a heavy overall weight, which is not only difficult to process, but also not conducive to the development trend of lightweight vehicles.

### SUMMARY

The object of the present invention is to provide a vehicle steering knuckle integrally formed with steering arm and machining process thereof, whose structure is scientific and compact. The lightweight of the vehicle steering knuckleis realized by extending the short lugs of the steering knuckle with the premise of the mechanical performance of the product is guaranteed.

The technical solution adopted by the present invention to solve its technical problems is providing a vehicle steering knuckle integrally formed with a steering arm, which comprises a rod portion, a plate portion and a lug portion, the lug portionincludes a long lug and a short lug, the long lug and the short lug are each provided with a main pin hole, a steering arm connected to a steering tie rod extends laterally from a front end of the short lug on a plane perpendicular to the main pin hole,the steering knuckle is integrally forged.

Preferably, afront end of the long lug extends in adirection of the axis of the rod portionto form a pulling armconfigured to connect to a steering drag link.

Preferably, a front end of the pulling arm is provided with a taper holeconfigured to connect to the steering drag link.

Preferably, a bending end is provided on a terminal end of the steering arm, a connection hole configured to connect to the steering tie rod is provided at the bending end.

Preferably, the plate portion is provided with mounting hole configured to mount a braking device, and a central line of the mounting holeis parallel to the axis of the rod portion.

Preferably, a forging parting surface of the steering knuckle is a plane where the axis of the rod portion and the axis of the main pin hole are located, and the pulling arm is symmetrical with respect to the forging parting surface.

Preferably, a sectional area of the pulling armgradually decreases towarda side far from the axis of the rod portionalong a length direction.

Preferably, a thickness of one side of the steering armnear the plate portion is greater than a thickness of the other side.

Preferably, a thickness of the pulling arm is less than a thickness at the main pin hole of the long lug, and a thickness of the steering arm is less than a thickness at the main pin hole of the shortlug.

The technical solution of this invention further comprises a method of producing the vehicle steering knuckle integrally formed with steering arm, which comprises the following steps: upsetting portion of a billet to form the plate portion; forging one end of the plate portionto preliminarily form the rod portion; flattening another end of the plate portion, preforging, distributing materials, and forging to form a workpiece comprising two long straight arms; horizontally placing the workpiece into a bending die under a hot state, where the two long straight arms are on one horizontal plane; bending one long straight arm downwardly in a vertical direction by a bending correction die to form the steering arm, and calibrating the workpiece; and forging the other long straight arm to yield the pulling arm.

Preferably, a distance between a bending neutral layer of the steering arm and an upper surface of the steering arm is M, and a distance between the bending neutral layer of the steering arm and a lower surface of the steering arm is N; M after bending is 90% to 95% of M before bending, and N after bending is 105% to 115% of N before bending.

The invention has a scientific structure, which simplifies the structure of the plate portion and the lug portion, and facilitates the cutting tool to be inserted into the lug portionto process the inside of the lug portion and the plate portion. In particular, the steering arm is directly formed integrally with the steering knuckle, which omits the connection device. The elongated steering arm is connected with other parts, which simplifies the structure of the vehiclesteering system and obtains a novel steering knuckle with light weight. It is conducive to achieving the lightweight and processing of the vehicleknuckle under the condition of ensuring the mechanical performance of the product. During the processing, the lug portion is processed into two long straight arms firstly. Since there are no other connecting arms at the lug portion, the structure is simple and easy to be forged. Then, one long straight arm is bent into a steering arm by bending, which reduces the difficulty of forging.

### BRIEF DESCRIPTION OF THE DRAWINGS

FIG. **1** shows a vehicle steering knuckle integrally formed with steering arm according to one embodiment of this invention;
FIG. **2** is a front view of a vehicle steering knuckle integrally formed with steering arm according to another embodiment of this invention;
FIG. **3** is sectional view along a direction of the forging parting surface in FIG. **2****;** and
FIG. **4** is top view of a vehicle steering knuckle integrally formed with steering armshown in FIG. **2****.**

In figures: 1-Rod portion; 2- Plate portion; 21-Mounting hole; 3-Lug portion; 31 -Long lug; 32-Short lug; 4-Main pin hole; 5-Pulling arm; 51 -Taper hole; 6-Steering arm; 61-Connection hole

### DETAILED DESCRIPTIONS

To further illustrate, embodiments detailing a steering knuckle are described below. It should be noted that the following embodiments are intended to describe and not to limit the invention.

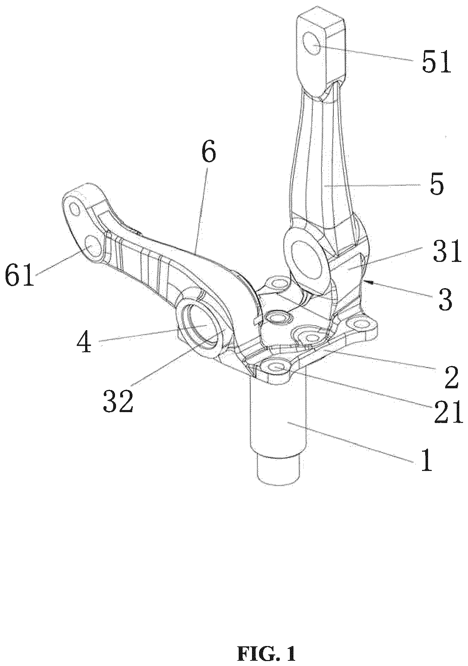

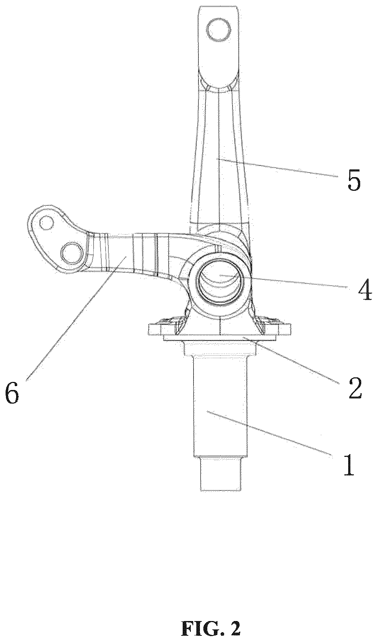

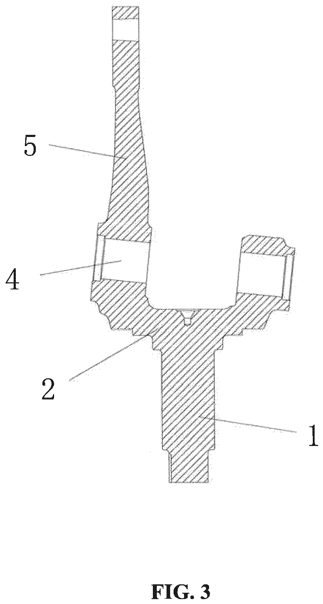

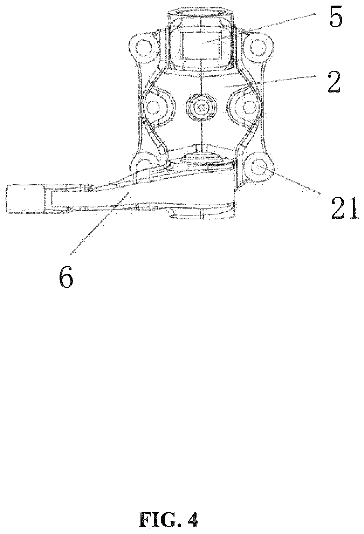

As shown in FIGS. **1-4****,** a vehicle steering knuckle integrally formed with steering arm comprises a rod portion **1**, a plateportion **2**, and a lugportion **3**. The lugportion **3** comprises a long lug **31** and a shortlug **32.** The long lug **31** and the short lug **32** each comprise a main pin hole **4**. A front end of the long lug 31 extends in a direction of the axis of the rod portion 1 to form a pulling arm 5configured to connect to a steering drag link.A steering arm 6 connected to a steering tie rod extends laterally from a front end of the short lug 32 on a plane perpendicular to the main pin hole 4,the steering knuckle is integrally forged. As shown in FIG. **1****,** the invention utilizes the structural features of the long lug 31 and the short lug 32. The pulling arm **5** and the long lug **31** combine to form anextended arm. The steering arm **6** and the short lug **32** combine to form a bending arm. The bending arm is formed by forging and deforming a billetto obtain a bent shape. In the forging process, the knuckle comprises a rod portion, a plate portion and two long lugs, which are easily to be forged into shape. The difficulty of the process lies in a bending correction process which can be realized by a bending correction die designed by our company. In the machining stage, the two lugs are first vertical to the plateportion, which is convenient for the cutter to extend into the lugportion and the plateportion for machining. Compared with the prior art, the most important advantage is that the pulling arm **5** and the steering arm **6** are directly integrated with the plateportion, reducing the connection portions. The pulling arm **5** and the steering arm **6** are connected with other portions, thereby simplifying the structure of the automobile steering system, obtaining a new type of steering knuckle with lightweight structure without damaging the mechanical properties. Compared with the prior art, the weight of the steering knuckle can be reduced by about 4kg.

A front end of the pulling arm 5 is provided with a taper hole 51 configured to connect to the steering drag link.

Abending end is provided on a terminal end of the steering arm 6, a connection hole 61 configured to connect to the steering tie rod is provided at the bending end.

The plate portion 2 is provided with mounting hole 21 configured to mount a braking device, and a central line of the mounting hole 21 is parallel to the axis of the rod portion 1.

Further, the main shapes of the pulling arm 5 and the steering arm 6 are the same as those of the individual parts in the prior art, but in order to facilitate forging, they need to be improved.In this invention, the forging parting surface of the steering knuckleis determined as a plane where the axis of the rod portion 1 and the axis of the main pin hole 4 are located, and the pulling arm 5 is symmetrical with respect to the forging parting surface. This facilitates the formation of the pulling arm **5** and the steering arm **6.**

Further,a sectional area of the pulling arm 5 gradually decreases towarda side far from the axis of the rod portion 1 along a length direction. Thus, the distance between the two lugs isenlarged, and the overall weight of the steering knuckle is reduced.

Further,a thickness of one side of the steering arm 6near the plate portion 2 is greater than a thickness of the other side. Thus, the strength of the steering arm **6** is enhanced and can meet the requirements for bending the arm after being forged.

Further, a thickness of the pulling arm 5 is less than a thickness at the main pin hole 4 of the long lug 31, and a thickness of the steering arm 6 is less than a thickness at the main pin hole 4 of the shortlug 32.

A method of producing the vehicle steering knuckle integrally formed with steering arm comprises upsetting portion of a billet to form the plateportion **2**; forging one end of the plateportion **2** to form the rod portion **1**; flattening another end of the plateportion **2**, preforging, distributing materials, forging to form two long straight arms; horizontally placing the workpiece into a bending die under a hot state, where the two long straight arms are on one horizontal plane; bending one long straight arm downwardly in a vertical direction by a bending correction die to form the steering arm 6, and calibrating the workpiece; forging the other straight arm to yield the pulling arm **5**. During the processing, the lugportion is first processed into two long straight arms. Because there are no other connecting devices in the lugportion, the lugportionhas a simple structure and is convenient for forging. In the pre-forging and final forging stages, the steering knuckle is divided into three portions, that is, the rod portion **1**, the plate portion **2** and the lugportion **3**, along the axial direction of the rod portion **1**. The lugportion **3** comprises two long straight arms having a relatively regular surface shape, so it is easy to forge. Then, one of the twolong straight arms is bent into a steering arm, which reduces the difficulties of the forging.

Further, a distance between a bending neutral layer of the steering arm 6 and an upper surface of the steering arm 6 is M, and a distance between the bending neutral layer of the steering arm 6 and a lower surface of the steering arm6 is N. M after bending is 90% to 95% of M before bending, and N after bending is 105% to 115% of N before bending. The upper surface refers to the upwardsurface of the steering arm 6 in FIG. 1 along a vertical direction, and the lower surface refers to the downward surface of the steering arm 6 in FIG. 1 along the vertical direction. In the process of bending, as the upper surface becomes thinner in tension, the lower surface becomes denser in compression, and the smaller the thicknessof the upper surface, and the larger the thicknessof the lower surface. To ensure the bended product meets the requirements, the mold cavity corresponding to the steering arm **6** in the finisher is modified as needed.

Further, the bending angle of the one of the two straight arms is less than 90° in the bending die.

Further, in the pre-forging and forging stages, the shape of the terminal endsof the two long straight arms is unchanged. In the process of bending, the terminalends of the two long straight arms will not be deformed.

Further, in the pre-forging stage, first, the metal accumulated in the lugportion is divided, and then the two long straight arms are formed by extrusion of the metal in the forging stage.

It will be obvious to those skilled in the art that changes and modifications may be made, and therefore, the aim in the appended claims is to cover all such changes and modifications.

## Claims

1. A vehicle steering knuckle integrally formed with a steering arm, comprises a rod portion (1), a plate portion (2) and a lug portion (3), the lug portion (3) includes a long lug (31) and a short lug (32), the long lug (31) and the short lug (32) are each provided with a main pin hole (4), wherein a steering arm (6) connected to a steering tie rod extends laterally from a front end of the short lug (32) on a plane perpendicular to the main pin hole (4), the steering knuckle is integrally forged.

2. The vehicle steering knuckle of claim 1, wherein a front end of the long lug (31) extends in a direction of the axis of the rod portion (1) to form a pulling arm (5) configured to connect to a steering drag link.

3. The vehicle steering knuckle of claim 2, wherein a front end of the pulling arm (5) is provided with a taper hole (51) configured to connect to the steering drag link.

4. The vehicle steering knuckle of claim 1, wherein a bending end is provided on a terminal end of the steering arm (6), a connection hole (61) configured to connect to the steering tie rod is provided at the bending end.

5. The vehicle steering knuckle of claim 1, wherein the plate portion (2) is provided with a mounting hole (21) configured to mount a braking device, and a central line of the mounting hole (21) is parallel to the axis of the rod portion (1).

6. The vehicle steering knuckle of claim 2, wherein a forging parting surface of the steering knuckle is a plane where the axis of the rod portion (1) and the axis of the main pin hole (4) are located, and the pulling arm (5) is symmetrical with respect to the forging parting surface.

7. The vehicle steering knuckle of claim 6, wherein a sectional area of the pulling arm (5) gradually decreases towards a side far from the axis of the rod portion (1) along a length direction.

8. The vehicle steering knuckle of claim 6, wherein a thickness of one side of the steering arm (6) near the plate portion (2) is greater than a thickness of the other side.

9. The vehicle steering knuckle of claim 6, wherein a thickness of the pulling arm (5) is less than a thickness at the main pin hole (4) of the long lug (31), and a thickness of the steering arm (6) is less than a thickness at the main pin hole (4) of the shortlug (32).

10. A method of producing the vehicle steering knuckle integrally formed with steering arm of any one of the claims 7 to 9, comprising upsetting portion of a billet to form the plate portion (2); forging one end of the plate portion (2) to preliminarily form the rod portion (1); flattening another end of the plate portion (2), preforging, distributing materials, and forging to form a workpiece comprising two long straight arms; horizontally placing the workpiece into a bending die under a hot state, where the two long straight arms are on one horizontal plane; bending one long straight arm downwardly in a vertical direction by a bending correction die to form the steering arm (6), and calibrating the workpiece; and forging the other long straight arm to yield the pulling arm (5).

11. The method of claim 10, wherein a distance between a bending neutral layer of the steering arm (6) and an upper surface of the steering arm (6) is M, and a distance between the bending neutral layer of the steering arm (6) and a lower surface of the steering arm (6) is N; M after bending is 90% to 95% of M before bending, and N after bending is 105% to 115% of N before bending.
